(19) **Europäisches Patentamt**
**European Patent Office**
**Office européen des brevets**

(11) **EP 2 367 627 B1**

(12) # FASCICULE DE BREVET EUROPEEN

(45) Date de publication et mention de la délivrance du brevet:
**17.07.2019 Bulletin 2019/29**

(21) Numéro de dépôt: **09805693.0**

(22) Date de dépôt: **09.12.2009**

(51) Int Cl.:
*B01J 20/02* (2006.01)     *B01J 20/06* (2006.01)
*B01J 20/28* (2006.01)     *C01B 3/00* (2006.01)
*C01B 3/50* (2006.01)     *G21F 5/06* (2006.01)

(86) Numéro de dépôt international:
**PCT/EP2009/066769**

(87) Numéro de publication internationale:
**WO 2010/066811 (17.06.2010 Gazette 2010/24)**

(54) **MATÉRIAU POUR LE PIÉGEAGE D'HYDROGÈNE, PROCÉDÉ DE PRÉPARATION ET UTILISATIONS.**

WASSERSTOFFABFANGMATERIAL, HERSTELLUNGSVERFAHREN UND VERWENDUNGEN

HYDROGEN-TRAPPING MATERIAL, METHOD OF PREPARATION AND USES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **11.12.2008 FR 0858488**

(43) Date de publication de la demande:
**28.09.2011 Bulletin 2011/39**

(73) Titulaire: **Commissariat à l'Énergie Atomique et aux Énergies Alternatives**
**75015 Paris (FR)**

(72) Inventeurs:
• **LAMBERTIN, David**
**F-84100 Orange (FR)**
• **CAU DIT COUMES, Céline**
**F-30126 Tavel (FR)**

• **FRIZON, Fabien**
**F-30400 Villeneuve-les-avignon (FR)**
• **JOUSSOT-DUBIEN, Christophe**
**F-30650 Rochefort Du Gard (FR)**

(74) Mandataire: **Ilgart, Jean-Christophe**
**BREVALEX**
**95, rue d'Amsterdam**
**75378 Paris Cedex 8 (FR)**

(56) Documents cités:
**EP-A2- 0 054 604     DE-A1- 3 730 743**
**DE-A1- 3 840 794     FR-A1- 2 527 376**
**FR-A1- 2 874 120     US-A- 3 939 006**
**US-A- 4 252 666     US-A- 4 943 394**
**US-A- 5 888 925**

**Description**

**DOMAINE TECHNIQUE**

La présente invention appartient au domaine technique de l'élimination des gaz inflammables tels que l'hydrogène.

Plus particulièrement, la présente invention propose un matériau comprenant au moins un piégeur d'hydrogène enrobé dans une matrice minérale et ce, pour la gestion du risque hydrogène notamment dans le cadre de la sûreté du transport des déchets radioactifs et la phase de réversibilité du stockage.

La présente invention concerne également un procédé de préparation d'un tel matériau, ses utilisations et un procédé d'élimination de l'hydrogène.

**ÉTAT DE LA TECHNIQUE ANTÉRIEURE**

Les installations nucléaires génèrent une certaine quantité de « déchets technologiques » qui peuvent comprendre des objets et des matériaux de natures très diverses tels que des pièces de moteurs, des filtres, des déchets métalliques, des gravats, des verres, etc.... Dans ces déchets, se trouvent également des matières organiques à base de cellulose comme du papier, du bois, du coton, ou sous forme de matières plastiques telles que des housses de conditionnement en vinyle ou en polyuréthanne, des bottes, des gants, et des objets divers en matériaux polymères. Tous ces déchets peuvent également renfermer de petites quantités de liquides tels que de l'eau et des liquides organiques (huiles, hydrocarbures, etc...). Tous ces déchets constituent des matières radioactives soit activées durant leur séjour dans les installations nucléaires, soit contaminées par de la poudre d'uranium ou de plutonium radioactif lors de leur utilisation dans ces installations. Les déchets technologiques sont périodiquement évacués vers des centres de traitement et de stockage. Pour cela, ils sont conditionnés dans des récipients tels que des fûts, des poubelles ou des étuis qui sont ensuite placés dans des conteneurs.

Le transport et le stockage des déchets technologiques pose une difficulté spécifique liée à la nature des matières transportées. En effet, comme précédemment décrit, ces déchets contiennent souvent des matières organiques solides ou sous forme de liquides résiduels, ou encore une certaine quantité d'eau, contaminées par de l'uranium ou du plutonium qui confère à ces matières un caractère radioactif. Or, l'uranium et le plutonium sont des émetteurs de particules $\alpha$ qui ont notamment pour propriété de dissocier les molécules organiques pour libérer des composés gazeux tels que du monoxyde de carbone, du gaz carbonique, de l'oxygène et de l'azote, ainsi que des gaz inflammables. Ce phénomène, appelé « radiolyse », se traduit par une dissociation des molécules des composés organiques carbonés et hydrogénés tels que ceux qui sont contenus dans les matières plastiques et les hydrocarbures ou par une dissociation des molécules d'eau, avec production d'hydrogène.

La production de gaz inflammables et notamment d'hydrogène par radiolyse pose principalement des problèmes lorsque les déchets technologiques sont confinés dans une enceinte fermée de volume relativement limité. En effet, les gaz de radiolyse sont alors libérés dans un volume confiné, de telle sorte qu'on peut atteindre rapidement une concentration élevée en gaz inflammables.

Lors du transport de ces déchets technologiques et afin d'optimiser la capacité de transport, un nombre important de récipients de déchets sont placés dans un même conteneur, ce qui réduit l'espace libre disponible dans le conteneur pour les gaz inflammables qui s'échappent des déchets et des récipients. De plus, les récipients de conditionnement des déchets fermés par des couvercles éventuellement sertis par des joints présentent une certaine étanchéité. Dans ce cas, les gaz inflammables s'accumulent préférentiellement dans l'espace confiné constitué par l'espace libre résiduel existant à l'intérieur de chacun des récipients.

De façon générale, les gaz inflammables produits par radiolyse constituent un mélange détonnant lorsqu'ils sont mis en présence d'autres gaz tels que l'air, lorsque leur concentration dépasse une valeur limite, dite « seuil d'inflammabilité ». Dans le cas de l'hydrogène, le seuil d'inflammabilité dans l'air est situé autour de 4%. Ainsi, lorsque la concentration en hydrogène dans l'air dépasse ce seuil, une source de chaleur ou une étincelle peut suffire à enflammer le mélange ou à produire une déflagration violente dans une enceinte confinée.

Diverses études et observations ont montré que la concentration des gaz inflammables tels que l'hydrogène, produits par radiolyse dans une enceinte fermée contenant des matières radioactives comportant des composants hydrogénés, peut parfois atteindre des valeurs d'environ 4% au bout de quelques jours. Cette situation correspond notamment au cas où les déchets technologiques émettent des particules $\alpha$ intenses et contiennent de nombreuses molécules organiques.

Or, il est courant qu'un conteneur reste fermé pour des durées beaucoup plus longues avant d'être ouvert. Dans ce cas, une étincelle occasionnée par des chocs ou des frottements produits, en cours de transport, dans l'enceinte du conteneur ou dans un récipient rempli de déchets, pourrait entraîner une inflammation ou une explosion. Une telle inflammation ou explosion risque de s'étendre à l'ensemble du chargement du conteneur, ce qui se traduit par un risque d'accident grave sur la voie publique. Un risque comparable existe si le conteneur se trouve pris dans une situation accidentelle d'incendie durant son transport. De plus, le risque d'accident subsiste lors des opérations finales d'ouverture du conteneur et de déchargement des récipients, et lors de leur ouverture éventuelle. En effet, ces opérations nécessitent de nombreuses manipulations, alors potentiellement dangereuses.

Il est particulièrement important de prendre en compte le risque d'accumulation de gaz inflammables comme l'hydrogène dans toute enceinte fermée appelée à contenir des matières radioactives. Des mesures doivent donc être prises afin de permettre l'élimination des gaz inflammables tels que l'hydrogène produits par radiolyse et ainsi éviter le risque d'explosion hydrogène.

De nombreux composés susceptibles de piéger l'hydrogène pendant le transport de déchets radioactifs ont été proposés (composés organiques, hydrures et oxydes métalliques...) [1]. Le choix de l'utilisation de ces piégeurs d'hydrogène, communément nommés « getter » dans la littérature, dépend de la réversibilité de la réaction de l'hydrogène et du matériau. La difficulté réside aussi dans la gestion des poisons gazeux qui peuvent empêcher la réaction de l'hydrogène avec le piégeur.

Une technique pour éliminer les gaz inflammables tels que l'hydrogène se trouvant à l'intérieur d'une enceinte fermée telle qu'un conteneur de transport de déchets radioactifs, est basée essentiellement sur l'introduction dans l'enceinte d'un piégeur catalysant la recombinaison de l'oxygène et de l'hydrogène en eau (ou recombineur catalytique d'hydrogène), au contact duquel l'hydrogène se combine avec l'oxygène présent dans l'air de la cavité pour former de l'eau suivant le mécanisme d'oxydation catalytique de l'hydrogène. La demande de brevet FR 2 874 120 [2] décrit l'utilisation, dans une enceinte fermée, a) d'un catalyseur d'une réaction d'oxydation de l'hydrogène par l'oxygène de l'enceinte, supporté par un support inerte solide et b) d'un catalyseur de la réaction d'oxydation de CO en $CO_2$. Le premier catalyseur se présente avantageusement sous forme d'alumine imprégnée de palladium et le second catalyseur sous forme d'un mélange comprenant du CuO et du $MnO_2$.

De nombreuses combinaisons de piégeurs organiques ont été brevetées avec différents catalyseurs tels que platine et palladium, et différents supports tels que graphite, oxyde d'aluminium et carbonate de baryum. Ainsi, les brevets US 5,837,158 et US 6,063,307 décrivent une composition pour éliminer l'hydrogène d'un espace clos comprenant un polymère organique, un catalyseur d'hydrogénation et un diluant inerte [3, 4]. Le brevet US 7,001,535 propose une composition pour éliminer l'hydrogène et l'eau produite par oxydation catalytique de l'hydrogène, ladite composition comprenant un polymère organique, un catalyseur d'hydrogénation et un polyacrylate absorbant l'eau liquide [5]. Ces différentes compositions sont commercialisées par la société Vacuum Energy, Inc (USA) [6]. La gestion des poisons tels que le monoxyde de carbone, le tétrachlorure de carbone, etc... est réalisée par l'addition de composés réactifs (zéolite, HOPCALITE®) [7] ou par l'enrobage du piégeur organique dans du PVC ou du polystyrène [8]. La limite d'utilisation de cette technologie est la présence de composés organiques et leurs sensibilités à l'irradiation.

Quant aux hydrures métalliques, de nombreux composés ont été étudiés pour le stockage de l'hydrogène dans le cadre des nouvelles technologies de l'énergie [9]. De nombreux documents sur l'utilisation d'alliages à base de zirconium, de vanadium, de fer, d'aluminium et de nickel sont disponibles. La mise en forme de ces matériaux repose sur des techniques classiques de métallurgie.

Des oxydes métalliques peuvent également être utilisés pour le piégeage de l'hydrogène [10]. La demande internationale WO 2006/064289 décrit l'utilisation de deux oxydes métalliques et notamment d'un oxyde de palladium et d'un oxyde de métal de transition [11]. Dans cette demande internationale, le piégeur d'hydrogène se présente notamment sous forme de pastilles, le mélange d'oxydes métalliques pouvant en outre comprendre un matériel absorbant l'humidité tel qu'une zéolithe et un liant tel que de la fumée de silice. Le brevet US 6,200,494 propose des mélanges de palladium métallique et d'un oxyde de métal de transition [12]. Le brevet US 5,888,925 décrit un piégeur d'hydrogène comprenant un oxyde d'un métal du groupe du platine et un tamis moléculaire dessicatif du type zéolithe mélangé à un élastomère à base de silicone pour former une matrice [13], ce liant ayant la faiblesse d'être sensible à la radiolyse.

Parmi les oxydes métalliques utilisables préférés, l'oxyde de manganèse catalysé par l'oxyde d'argent réagit dès la température ambiante avec l'hydrogène. D'après A. Kozawa, le mélange de $MnO_2$ (90% massique) et d'$Ag_2O$ (10% massique) apparaît comme le mélange optimal pour une capacité de piégeage d'hydrogène maximum [14]. Une mise en forme de ce mélange réactif a été proposée par compactage de poudre afin d'obtenir des pastilles de 1 cm de hauteur [15]. Toutefois, aucun piégeur d'hydrogène particulier contenant un tel mélange d'oxyde, non sensible à la radiolyse et pouvant gérer des gaz poisons n'a été proposé.

Le brevet US 3,939,006 appartient au domaine des cellules électrochimiques et notamment des cellules galvaniques scellées. Ce brevet décrit une matière absorbant l'hydrogène comprenant trois composants essentiels qui sont (1) une substance qui réagit avec l'hydrogène du type oxyde métallique, (2) un catalyseur pour la réaction d'oxydation de l'hydrogène et (3) un liant pour maintenir les composants (1) et (2) comme une unité intégrale. Le liant préféré est un ciment Portland présentant un rapport E/C de 1,36 (cf. exemple 1 où 7 ml d'eau sont utilisés avec 16 g d'un mélange de 248 g comprenant 80 g de ciment) [18].

Le brevet US 4 943 394 décrit un matériau apte à piéger de l'hydrogène comprenant potassium permanganate dans une matrice cimentaire, ladite matrice cimentaire étant une matrice cimentaire hydraulique connu comme ciment Portland. Le matériau est utilisé pour enrober des matières radioactives.

Il existe donc un besoin pour un dispositif qui permette d'éliminer les gaz inflammables, et notamment l'hydrogène, sur une longue durée, dans une enceinte fermée ou non contenant des matières radioactives, ce dispositif devant être facile à manipuler et à préparer et non sensible à la radiolyse.

## EXPOSÉ DE L'INVENTION

La présente invention permet de remédier, au moins en partie, aux inconvénients et problèmes techniques listés ci-dessus. En effet, cette dernière propose un procédé et un dispositif d'élimination de l'hydrogène dans lesquels un composé piégeur d'hydrogène (dit « getter ») est dispersé, enrobé et/ou incorporé dans une matrice cimentaire, i.e. une matrice à base de polymères alumino-silicatés amorphes laissant diffuser l'hydrogène et pouvant ainsi réagir avec le piégeur.

En effet, l'enrobage d'un piégeur d'hydrogène dans une matrice ne modifie en rien sa réactivité vis-à-vis des gaz inflammables comme l'hydrogène. La dégradation radiolytique du matériau selon l'invention est limitée par le choix d'une matrice minérale.

De plus, cette matrice cimentaire constitue un réservoir d'espèces qui peuvent neutraliser les acides simultanément présents avec l'hydrogène dans les gaz de radiolyse et ainsi les empêcher d'empoisonner le piégeur d'hydrogène. Ainsi, la matrice cimentaire mise en oeuvre dans la présente invention offre l'avantage de piéger des gaz poisons acide comme le HCl et ce par réaction chimique. La formulation de la matrice inorganique permet de contrôler la porosité du mélange ciment/piégeur d'hydrogène et ainsi de limiter l'action des poisons potentiels sur le piégeur d'hydrogène.

Enfin, le matériau objet de l'invention est un matériau facile à préparer, facile à manipuler et prêt à l'emploi.

Plus particulièrement, la présente invention propose un matériau apte à piéger l'hydrogène comprenant au moins un oxyde métallique dans une matrice cimentaire géopolymérique, ledit oxyde métallique étant de l'oxyde de manganèse catalysé par l'argent.

Le matériau objet de la présente invention est apte à piéger l'hydrogène. Dans le cadre de la présente invention, on entend par hydrogène, l'hydrogène gazeux $H_2$ et les formes isotopiques de celui-ci. Par « formes isotopiques de l'hydrogène », on entend les formes deutériées comprenant au moins un deutérium de formule $_1^2\mathrm{H}$ et représenté par D, telles que HD et $D_2$ ; les formes tritiées comprenant au moins un tritium de formule $_1^3\mathrm{H}$ et représenté par T, telles que HT et $T_2$ et les formes mixtes (c'est-à-dire à la fois deutériées et tritiées) telles que DT.

On connaît des oxydes métalliques aptes à piéger l'hydrogène par réduction irréversible dudit oxyde métallique. En effet, un tel piégeur d'hydrogène peut être régénéré partiellement par chauffage mais sans dégagement d'hydrogène ; ledit piégeage est donc irréversible. Dans le matériau objet de l'invention tel que défini à la revendication 1 ou 2, ledit oxyde métallique se trouve enrobé, dispersé et/ou incorporé dans la matrice cimentaire dudit matériau. Un oxyde métallique est un oxyde d'un métal appartenant au groupe du platine, un oxyde d'un métal alcalino-terreux, un oxyde d'un métal de transition ou un de leurs mélanges. En particulier, un oxyde métallique est choisi dans le groupe constitué par l'oxyde de platine, l'oxyde de palladium, l'oxyde de rhodium, l'oxyde de ruthénium, l'oxyde de beryllium, l'oxyde de magnésium, l'oxyde de calcium, l'oxyde de strontium, l'oxyde de baryum, l'oxyde de radium, l'oxyde de manganèse, l'oxyde de manganèse catalysé par l'argent, l'oxyde de cuivre, l'oxyde de fer, l'oxyde de nickel, l'oxyde de cobalt, l'oxyde de cerium, l'oxyde d'argent, l'oxyde de zirconium et leurs mélanges. Par « mélanges », on entend ici un mélange d'au moins deux, d'au moins trois ou d'au moins quatre oxydes différents de la liste ci-dessus.

Dans la présente invention, l'oxyde métallique utilisé est un oxyde de manganèse ($MnO_2$) catalysé par l'argent. Comme défini dans le brevet US 4,252,666 [14], un oxyde de manganèse catalysé par l'argent est un mélange d'un oxyde de manganèse avec de l'argent métallique, un composé à base d'argent ou un mélange de ceux-ci. Dans le mélange avantageusement homogène ainsi obtenu, l'argent est présent en une quantité catalytique, i.e. une quantité suffisante pour catalyser la réaction entre l'oxyde de manganèse et l'hydrogène. Un composé à base d'argent peut notamment être choisi dans le groupe constitué par un oxyde d'argent, un acétate d'argent, un carbonate d'argent, un chromate d'argent, un dichromate d'argent, un nitrate d'argent, un nitrite d'argent un permanganate d'argent, un métaphosphate d'argent, un pyrophosphate d'argent, un sulfate d'argent, un perchlorate d'argent, un chlorure d'argent et leurs mélanges.

Dans une mise en oeuvre toute particulière de la présente invention, l'oxyde métallique utilisé est un mélange d'oxyde de manganèse ($MnO_2$) et d'oxyde d'argent ($Ag_2O$). Dans le mélange $MnO_2/Ag_2O$ mis en oeuvre dans le cadre de la présente invention, la quantité d'argent est, avantageusement, comprise entre 0,5 et 30% et notamment entre 1 et 10% en poids par rapport au poids total dudit mélange.

Par « matrice cimentaire », on entend dans le cadre de la présente invention un matériau solide et poreux à l'état sec, obtenu suite au durcissement d'un mélange plastique contenant des matériaux finement broyés et de l'eau ou une solution saline, ledit mélange plastique étant capable de faire prise et de durcir au cours du temps. Ce mélange peut également être désigné sous les termes « mélange cimentaire » ou « composition cimentaire ». L'homme du métier connaît différentes matrices cimentaires, naturelles ou synthétiques.

Dans une forme de mise en oeuvre n'appartenant pas à l'invention, la matrice cimentaire est une matrice cimentaire hydraulique dans laquelle le durcissement est le résultat de l'hydratation des matériaux finement broyés du mélange cimentaire. Les matériaux finement broyés du mélange cimentaire sont constitués, en totalité ou en partie, d'un clinker finement broyé. Par « clinker », on entend un mélange comprenant un ou plusieurs éléments choisis dans le groupe constitué par :

- un calcaire,
- un calcaire ayant une teneur en CaO variant entre 50 et 60%,
- une source d'alumine telle que de la bauxite ordinaire ou de la bauxite rouge,
- une argile, et
- une source de sulfate telle que du gypse, du sulfate de calcium hémihydraté, du plâtre, de l'anhydrite naturelle ou des cendres sulfocalciques,

ledit (ou lesdits) élément(s) étant concassé(s), homogénéisé(s) et porté(s) à haute température supérieure à 1200°C, notamment supérieure à 1300°C, en particulier de l'ordre de 1450°C. Par « de l'ordre de 1450°C », on entend une température de 1450°C $\pm$ 100°C, avantageusement une température de 1450°C $\pm$ 50°C. L'étape de cuisson à haute température est appelée « clinkerisation ». Après la préparation du clinker et avant ou pendant son broyage, au moins un autre additif comme une source de sulfate telle que précédemment définie peut lui être ajouté.

Avantageusement, la matrice cimentaire hydraulique présente un rapport E/C compris entre 0,3 et 1,5 et notamment entre 0,4 et 1. Par « rapport E/C », on entend le rapport en masse de la quantité d'eau (ou de solution saline) sur la quantité de ciment (i.e. mélange cimentaire sec qui correspond au mélange cimentaire sans eau ou solution saline). Ces quantités sont celles mises en oeuvre au moment de la formulation de la matrice cimentaire. Un rapport E/C compris entre 0,3 et 1,5 et notamment entre 0,4 et 1 permet de garantir une quantité et une taille des pores dans la matrice cimentaire hydraulique optimales pour la diffusion des gaz et, par voie de conséquence, optimales pour le piégeage des gaz inflammables dans le matériau.

Dans cette forme de mise en oeuvre n'appartenant pas à l'invention, la matrice cimentaire peut être un ciment Portland ou un ciment Portland composé. Un ciment Portland comprend avantageusement entre 50 et 70% de silicate tricalcique [$(CaO)_3SiO_2$], entre 10 et 25% de silicate bicalcique [$(CaO)_2SiO_2$], entre 5 et 15% d'aluminate tricalcique [$(CaO)_3Al_2O_3$], entre 5 et 10% d'aluminoferrite tétracalcique [$(CaO)_4Al_2O_3Fe_2O_3$]. Un tel ciment Portland peut être mélangé avec des composés secondaires pour donner un « ciment Portland composé » dans lequel la quantité de composés secondaires comme du calcaire ou des laitiers de haut fourneau est supérieure à 3%, notamment comprise entre 5 et 80%, en particulier, comprise entre 10 et 60% en poids par rapport au poids total dudit ciment Portland composé. Avantageusement, le ciment Portland ou le ciment Portland composé mis en oeuvre présente un rapport E/C compris entre 0,3 et 1,5 et notamment entre 0,4 et 1.

Dans cette forme de mise en oeuvre n'appartenant pas à l'invention, la matrice cimentaire peut également être une matrice cimentaire alumineuse, i.e. dont le clinker comprend majoritairement des aluminates de calcium. Avantageusement, la matrice cimentaire alumineuse mise en oeuvre présente un rapport E/C compris entre 0,3 et 1,5 et notamment entre 0,4 et 1.

De plus, dans cette forme de mise en oeuvre n'appartenant pas à l'invention, la matrice cimentaire peut également être une matrice cimentaire sulfo-alumineuse et/ou ferro-alumineuse. La demande de brevet EP 0 900 771 décrit notamment des mélanges cimentaires à base de clinkers sulfo-alumineux et ferro-alumineux [16]. Ces clinkers sont des liants cimentaires aux propriétés de durcissement rapide et obtenus par une clinkerisation à une température variant entre 1200 et 1350°C de mélanges contenant au moins une source de chaux telle que des calcaires ayant une teneur en CaO variant entre 50 et 60%, au moins une source d'alumine et au moins une source de sulfate telles que précédemment définies. Avantageusement, un clinker sulfo-alumineux comprend entre 28 et 40% de $Al_2O_3$, entre 3 et 10% de $SiO_2$, entre 36 et 43% de CaO, entre 1 et 3% de $Fe_2O_3$, et entre 8 et 15% de $SO_3$. Un clinker ferro-alumineux comprend, quant à lui, entre 25 et 30% de $Al_2O_3$, entre 6 et 12% de $SiO_2$, entre 36 et 43% de CaO, entre 5 et 12% de $Fe_2O_3$, et entre 5 et 10% de $SO_3$. Avantageusement, la matrice cimentaire sulfo-alumineuse et/ou ferro-alumineuse mise en oeuvre présente un rapport E/C compris entre 0,3 et 1,5 et notamment entre 0,4 et 1.

La matrice cimentaire mise en oeuvre dans le cadre de la présente invention est une matrice cimentaire géopolymérique dans laquelle le durcissement est le résultat de la dissolution/polycondensation des matériaux finement broyés du mélange cimentaire dans une solution saline telle qu'une solution saline de fort pH.

Dans l'invention, la matrice cimentaire géopolymérique est donc un géopolymère. Par « géopolymère », on entend, dans le cadre de la présente invention, un polymère inorganique alumino-silicaté amorphe. Ledit polymère est obtenu à partir d'un matériau réactif contenant essentiellement de la silice et de l'aluminium, activé par une solution fortement alcaline, le rapport massique solide/solution dans la formulation étant faible. La structure d'un géopolymère est composée d'un réseau Si-O-Al formé de tétraèdres de silicates ($SiO_4$) et d'aluminates ($AlO_4$) liés en leurs sommets par partage d'atomes d'oxygène. Au sein de ce réseau, se trouve(nt) un (ou plusieurs) cation(s) compensateur(s) de charge également appelé(s) cation(s) de compensation qui permettent de compenser la charge négative du complexe $AlO_4^-$. Ledit (ou lesdits) cation(s) de compensation est(sont) avantageusement choisi(s) dans le groupe constitué par les métaux alcalins tels que le lithium (Li), le sodium (Na), le potassium (K), le rubidium (Rb) et le césium (Cs), les métaux alcalino-terreux tels que le magnésium (Mg), le calcium (Ca), le strontium (Sr) et le barium (Ba) et leurs mélanges. Le matériau réactif contenant essentiellement de la silice et de l'aluminium utilisable pour préparer la matrice cimentaire géopolymérique mise en oeuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc. ; des minéraux d'alumino-silicates naturels calcinés tels que le métakaolin ; des verres synthétiques à base d'alumino-silicates purs ; ciment alumineux ; de la ponce ; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse. Par « fortement alcaline » ou « de fort pH », on entend une solution dont le pH est supérieur à 9, notamment supérieur à 10, en particulier, supérieur à 11 et, plus particulièrement supérieur à 12.

La solution saline de fort pH comprend le cation de compensation ou le mélange de cations de compensation sous forme d'une solution ionique ou d'un sel. Ainsi, la solution saline de fort pH est notamment choisie parmi une solution aqueuse de silicate de sodium ($Na_2SiO_3$), de silicate de potassium ($K_2SiO_2$), d'hydroxyde de sodium (NaOH), d'hydroxyde de potassium (KOH), d'hydroxyde de calcium ($Ca(OH)_2$), d'hydroxyde de cesium (CsOH) et leurs dérivés sulfates, phosphates et nitrates, etc....

Dans le matériau objet de la présente invention, l'oxyde métallique est incorporé dans la matrice cimentaire jusqu'à un taux d'incorporation de 80% en masse par rapport à la masse totale dudit matériau. Avantageusement, ce taux d'incorporation est compris entre 5 et 70% et, en particulier, entre 10 et 50% en masse par rapport à la masse totale dudit matériau.

Le matériau objet de la présente invention peut se présenter sous diverses formes, de petite ou grande taille, en fonction de l'application recherchée. Ainsi, le matériau objet de la présente invention peut être sous forme d'une poudre fine, d'une poudre grossière, de grains, de granules, de pastilles, de billes, de balles, de blocs, de tiges, de cylindres, de plaques, ou des mélanges de ceux-ci. Ces diverses formes peuvent être obtenues notamment grâce à la plasticité, avant durcissement, de la matrice cimentaire du matériau objet de la présente invention.

La présente invention concerne aussi une enceinte fermée apte à contenir des matières radioactives susceptibles de produire, par radiolyse ou par réaction chimique, de l'hydrogène. L'enceinte objet de l'invention qui peut être hermétiquement fermée contient en outre au moins un matériau tel que précédemment défini.

Les matières radioactives que peut contenir l'enceinte objet de l'invention peuvent être des déchets technologiques tels que précédemment décrits, en provenance d'un atelier de fabrication ou de traitement d'éléments combustibles destinés à un réacteur nucléaire ou issus d'un tel réacteur. Avantageusement, l'enceinte fermée objet de la présente invention peut se présenter sous la forme d'un récipient, d'un fût, d'un fût prébétonné, d'un conteneur ou d'un conteneur prébétonné.

En effet, dans une application particulière relative au transport de matières radioactives, les matières radioactives sont généralement conditionnées dans des enceintes fermées tels que des récipients (ou fûts) arrimés à l'intérieur d'un conteneur. Le matériau selon la présente invention est alors avantageusement disposé à l'intérieur de ces récipients. Cela permet d'éliminer l'hydrogène directement où il est produit. Seule une très faible fraction de l'hydrogène s'échappera alors des récipients et diffusera dans le volume libre du conteneur, dans lequel il pourra être éliminé par un matériau selon la présente invention, également disposé en faible quantité dans ce volume libre.

Si les récipients sont étanches, on peut choisir de disposer le matériau selon la présente invention en quantité suffisante uniquement à l'intérieur de ces récipients. En effet, la concentration en hydrogène dans l'atmosphère du conteneur sera alors toujours insignifiante puisque l'hydrogène est éliminé dans les récipients et diffuse très peu dans l'enceinte du conteneur.

Il est à noter que l'introduction du matériau selon la présente invention dans les récipients permet de continuer à prévenir l'accumulation d'hydrogène après leur déchargement final. De plus, si les récipients sont destinés à être stockés sur site pour une longue durée, le matériau selon la présente invention peut éventuellement être renouvelé pour assurer l'élimination de l'hydrogène en continu sur le site de stockage. En d'autres termes, l'utilisation du matériau selon la présente invention n'est pas limitée à l'élimination de l'hydrogène produit dans une enceinte fermée en cours de transport.

La présente invention concerne également un procédé de préparation d'un matériau composite tel que précédemment défini. Ledit procédé de préparation tel que défini dans les revendications 4 à 9 comprend une étape consistant à incorporer un piégeur d'hydrogène contenant au moins un oxyde métallique dans un mélange cimentaire.

En particulier, le procédé de préparation selon l'invention comprend les étapes consistant à :

a) éventuellement préparer un piégeur d'hydrogène contenant au moins un oxyde métallique tel que précédemment défini ;
b) incorporer le piégeur d'hydrogène éventuellement préparé à l'étape (a) dans un mélange cimentaire géopolymérique.

L'étape (a) du procédé selon l'invention est facultative. En effet, le piégeur d'hydrogène contenant au moins un oxyde métallique utilisable dans ce procédé peut être un piégeur d'hydrogène accessible dans le commerce qui ne nécessite aucune préparation particulière avant l'enrobage par la matrice cimentaire.

En variante, le procédé de préparation selon l'invention peut comprendre les étapes consistant à :

a) préparer un piégeur d'hydrogène contenant au moins un oxyde métallique tel que précédemment défini ;
b) incorporer le piégeur d'hydrogène préparé à l'étape (a) dans un mélange cimentaire géopolymérique.

Dans ce cas, si l'homme du métier doit mettre en oeuvre l'étape (a) du procédé, i.e. si le piégeur d'hydrogène à base d'au moins un oxyde métallique doit être préparé, l'homme du métier saura facilement réaliser cette préparation.

Ainsi, lorsque l'oxyde métallique mis en oeuvre est un mélange d'oxyde de manganèse ($MnO_2$) et d'oxyde d'argent ($Ag_2O$), l'étape (a) du procédé consiste à mélanger du $MnO_2$ avantageusement sous forme de $MnO_2$ activé et de l'$Ag_2O$ et ce, sous agitation. A titre d'exemples, on peut citer une simple agitation par ultrasons, une agitation manuelle, une agitation mécanique à l'aide d'agitateurs mécaniques à tiges, pales, hélices, etc.... ou une combinaison de ces techniques d'agitation. On ajoute le mélange ainsi obtenu à de l'eau et ce, afin de faciliter la dispersion des poudres. Avantageusement, la quantité d'eau utilisée est comprise entre 20 et 60%, notamment entre 30 et 50% et, en particulier, de l'ordre de 40% en poids par rapport au mélange d'oxydes métalliques. Par « de l'ordre de 40% », on entend 40% $\pm$ 5%. L'ensemble est ensuite séché à l'étuve pendant entre 15 min et 6 h, notamment entre 30 min et 4 h et, en particulier, de l'ordre de 2 h. Par « de l'ordre de 2 h », on entend 2 h $\pm$ 30 min.

Avant d'être incorporé au mélange cimentaire lors de l'étape (b) du procédé selon l'invention, le piégeur d'hydrogène se présente avantageusement sous forme d'une poudre principalement constituée d'oxyde métallique et/ou sous forme d'agglomérats.

Un mélange cimentaire mis en oeuvre pour préparer une matrice cimentaire hydraulique ou géopolymérique est tel que précédemment défini. Ainsi, ce mélange cimentaire comprend un ou plusieurs éléments choisis dans le groupe constitué par :

i) de l'eau,
ii) un clinker et notamment un clinker tel que précédemment défini,
iii) une source de sulfate et notamment une source de sulfate telle que précédemment définie,
iv) une solution saline à fort pH et notamment une solution saline à fort pH telle que précédemment définie,
v) une source solide contenant des aluminosilicates amorphes et notamment une source solide contenant des aluminosilicates amorphes telle que précédemment définie, et
vi) des composants silicatés et notamment des composants silicatés tels que précédemment définis.

Les mélanges d'au moins deux éléments choisis parmi (i), (ii) et (iii) sont avantageusement choisis dans le cas d'une matrice cimentaire hydraulique ne faisant pas partie de l'invention, alors que, pour une matrice cimentaire géopolymérique mise en oeuvre dans l'invention, le mélange cimentaire comprendra au moins deux éléments choisis parmi (iv), (v) et (vi).

Les éléments qui composent le mélange cimentaire peuvent être mélangés ensemble soit préalablement, soit simultanément à l'incorporation du piégeur d'hydrogène. Lors de l'incorporation du piégeur d'hydrogène dans le mélange cimentaire, cette étape peut être réalisée sous agitation. Les formes de mise en oeuvre d'agitation précédemment envisagées s'appliquent également à l'agitation lors de l'étape (b) du procédé selon l'invention.

Suite à l'étape (b) du procédé selon l'invention, le mélange cimentaire dans lequel est incorporé le piégeur d'hydrogène est soumis à des conditions permettant le durcissement de la matrice cimentaire (étape (c)). Toute technique connue de l'homme du métier pour faire durcir un mélange cimentaire géopolymérique est utilisable lors de l'étape (c) du procédé.

Ce durcissement comprend avantageusement une étape de cure et/ou une étape de séchage. Lorsque l'étape

EP 2 367 627 B1

(c) comprend une étape de cure, cette dernière peut se faire par humidification de l'atmosphère entourant le mélange cimentaire dans lequel est incorporé le piégeur d'hydrogène ou par application d'un enduit imperméable sur ledit mélange. Cette étape de cure peut être mise en oeuvre sous une température comprise entre 10 et 60°C, notamment entre 20 et 50°C et, en particulier, entre 30 et 40°C et peut durer entre 1 et 40 jours, notamment entre 5 et 30 jours et, en particulier, entre 10 et 20 jours.

Lorsque l'étape (c) comprend une étape de séchage, cette dernière peut se faire à une température comprise entre 30 et 110°C, notamment entre 40 et 90°C et, en particulier, entre 50 et 70°C et peut durer entre 6 h et 10 jours, notamment entre 12 h et 5 jours et, en particulier, entre 24 et 60 h. Avantageusement, l'étape (c) comprend une étape de cure suivie par une étape de séchage, telles que précédemment définies. Il convient de noter qu'un séchage à une température de l'ordre de 105°C (i.e. 105°C ± 5°C) permet de gérer l'eau résiduelle dans la matrice cimentaire et éviter ainsi le phénomène de la radiolyse.

Lorsque l'étape (c) du procédé selon l'invention comprend une étape de cure et une étape de séchage telles que précédemment définies, le matériau obtenu présente une porosité optimale permettant l'accès du(des) gaz à piéger à l'oxyde (ou aux oxydes) métallique(s). En effet, un chemin diffusif optimal est obtenu grâce à un procédé présentant une telle étape de cure et une telle étape de séchage.

De plus, préalablement au durcissement du mélange cimentaire dans lequel est incorporé le piégeur d'hydrogène, ce dernier peut être placé dans des moules de façon à lui conférer une forme pré-déterminée suite à ce durcissement. Au contraire, la forme du matériau selon l'invention peut être obtenue après l'étape (c) du procédé, notamment en soumettant le produit durci à un ou plusieurs des traitements suivants : découpage, broyage, concassage, rabottage...

La présente invention concerne également l'utilisation d'un matériau selon l'invention pour éliminer l'hydrogène.

Dans une variante particulière de cette utilisation, l'élimination de l'hydrogène peut se faire *in situ.* Ainsi, cette variante concerne l'utilisation d'un matériau selon l'invention pour enrober au moins un déchet technologique ou au moins une matière radioactive. Ce déchet technologique ou cette matière radioactive est susceptible de produire, par radiolyse ou par réaction chimique, de l'hydrogène. Ledit gaz inflammable peut alors être piégé *in situ* par le matériau cimentaire selon l'invention enrobant le(s) déchet(s) technologique(s) ou la(les) matière(s) radioactive(s). Les déchets technologiques et matières technologiques susceptibles d'être mis en oeuvre sont tels que précédemment définis.

Cette variante consiste, plus particulièrement, à enrober au moins un déchet technologique ou au moins une matière radioactive dans le matériau obtenu suite à l'étape (b) telle que précédemment définie et ce préalablement à l'étape (c) telle que précédemment définie.

La présente invention concerne enfin un procédé d'élimination de l'hydrogène dans une enceinte fermée consistant à placer, dans ladite enceinte, un matériau selon l'invention. Toute enceinte fermée précédemment envisagée est utilisable dans ce procédé.

D'autres caractéristiques et avantages de la présente invention apparaîtront encore à l'homme du métier à la lecture des exemples ci-dessous donnés à titre illustratif et non limitatif, en référence à la figure annexée.

## BRÈVE DESCRIPTION DES DESSINS

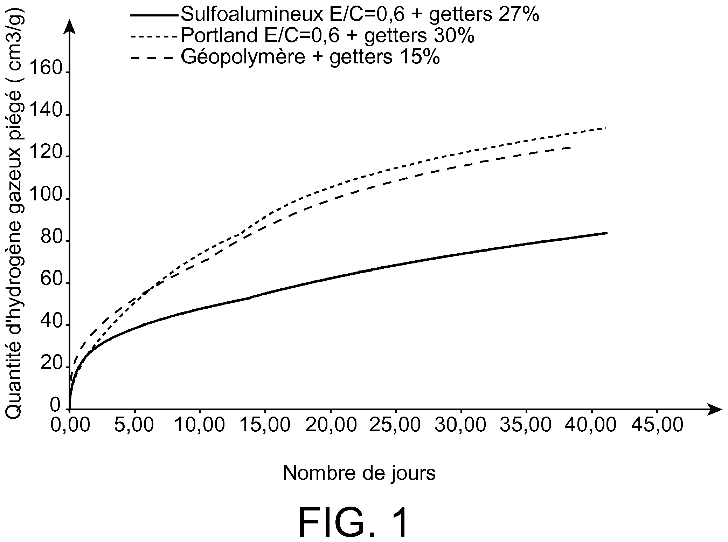

La figure 1 présente l'évolution de la capacité de piégeage des différents enrobés à base de piégeur hydrogène ($MnO_2$/$Ag_2O$) en fonction du temps.

## EXPOSÉ DÉTAILLÉ DE MODES DE RÉALISATION PARTICULIERS

### 1. Préparation des enrobés ciments avec le piégeur hydrogène.

Les oxydes métalliques pour la préparation du piégeur hydrogène sont du $MnO_2$ activé (Merck, >90%) et de l'$Ag_2O$ (Merck, >99%). Les deux composés sont mélangés mécaniquement et de l'eau est rajoutée au mélange puis l'ensemble est séché à l'étuve pendant 2 heures [16].

Des enrobés ciment/piégeur hydrogène ont été préparés à partir de différents liants. Les trois liants utilisés pour la préparation des enrobés avec du piégeur hydrogène sont les suivants :

- Géopolymère (enrobé n°1 faisant partie de l'invention),
- Ciment portland CEM I (enrobé n°2 ne faisant pas partie de l'invention),
- Sulfo-alumineux (enrobé n°3 ne faisant pas partie de l'invention).

Les produits employés pour le géopolymère sont du métakaolin de Pieri Premix MK (Grade Construction Products), du KOH (Prolabo, 98%) et du $SiO_2$ (Tixosil, Degussa).

Les enrobés Portland/getter et sulfo-alumineux/getter ont été préparés respectivement avec du ciment de type CEM I 52.5 N (Lafarge Le Teil) et un mélange 80/20 (en poids) de Clinker (yeelimite, β C2S) et de Gypse.

Les compositions des différents enrobés/getter sont reportées dans le tableau 1 ci-après.

Tableau 1 : Composition des différents enrobés ciment/piégeur hydrogène

| | Composition liant | Eau/ciment | Taux d'incorporation getters (%) |
|---|---|---|---|
| Enrobé 1 : géopolymère + getter | Métakaolin : 19,4 g<br>$SiO_2$ : 5,16 g<br>KOH : 8,03 g | / | 14,7 |
| Enrobé 2 : Portland CEM 1 + getter | Ciment CEM I: 10,14 g | 0,6 | 30 |
| Enrobé 3: sulfo-alumineux + getter | Clinker: 7,9 g<br>Gypse: 1,99 g | 0,6 | 27,5 |

Après gâchage des enrobés, ils ont été laissés sous cure à 32°C pendant 14 jours puis un séchage à 60°C pendant 48 heures a été réalisé.

## 2. Capacité de piégeage en hydrogène des enrobés.

Afin de déterminer la capacité de piégeage de l'hydrogène de l'enrobé 1 faisant partie de l'invention, de l'enrobé 2 ne faisant pas partie de l'invention et de l'enrobé 3 ne faisant pas partie de l'invention, des mesures de suivi de pression sous hydrogène pur ont été réalisées et des capacités de piégeage d'hydrogène ont ainsi pu être déterminées. Les capacités de piégeage ont été ramenées à la masse de piégeur hydrogène (Figure 1).

La capacité de piégeage des différents enrobés à base de piégeur hydrogène ($MnO_2/Ag_2O$) a été suivie en fonction du temps et les résultats sont présentés figure 1. La capacité théorique du mélange $MnO_2/Ag_2O$ (90/10 en poids) est de 196 $cm^3$/g [17]. Par conséquent, pour les enrobés 1 et 2, la mise en forme du piégeur hydrogène dans une matrice cimentaire n'affecte pas le caractère réactif vis-à-vis de l'hydrogène du mélange $MnO_2/Ag_2O$. À 40 jours, la capacité de piégeage de l'hydrogène est supérieure à 120 $cm^3$/g et ne s'est pas encore stabilisée. La cinétique de piégeage de l'hydrogène de l'enrobé 3 est beaucoup plus lente avec une capacité supérieure à 80 $cm^3$/g à 40 jours.

## 3. Conclusions.

L'incorporation de piégeurs hydrogène à base d'oxydes métalliques dans une matrice cimentaire permet une mise en forme simplifiée tout en gardant le caractère réactif vis-à-vis de l'hydrogène. Les principaux avantages de l'utilisation des matrices cimentaires sont la tenue à la radiolyse, le caractère neutralisant d'espèces acides et la gestion des poisons gazeux du piégeur par le contrôle de la porosité de l'enrobé.

## RÉFÉRENCES

[1] P.J. Nigrey, Sandia National Laboratories Report SAND2000-0483.

[2] Demande de brevet au nom de COGEMA LOGISTICS et publiée sous le numéro FR 2 874 120 le 10 février 2006.

[3] Brevet US 5,837,158 au nom de Sandia Corporation et publié le 17 novembre 1998.

[4] Brevet US 6,063,307 publié le 16 mai 2000.

[5] Brevet US 7,001,535 au nom de Sandia Corporation Laboratories et publié sous le numéro US 2003/0213934 le 20 novembre 2003.

[6] www.h2getters.com

[7] R. Livingston, J. Duffey, T. Shepodd and P. McConnell, Sandia National Laboratories Report SAND2002-8267.

[8] M. Stone, M. Benson, Idaho National Engineering and Environmental Laboratories Report, INEEL-EXT 2001-00085.

[9] M. Latroche, A. Percheron-Guegan, Ann. Sci. Mat., 2005, 30 (5), pp 471-482.

[10] H. Charcosset, B. Delmon, Ind. Chim. Belg., 38, (1973), pp 481-495.

[11] Demande internationale WO 2006/064289 au nom de JOHNSON MATTHEY PLC publiée le 22 juin 2006.

[12] Brevet US 6,200,494 au nom de Saes Getters et publié le 13 mars 2001.

[13] Brevet US 5,888,925 au nom de AlliedSignal Inc. et publié le 30 mars 1999.

[14] Brevet US 4,252,666 au nom de Union Carbide Corporation et publié le 24 février 1981.

[15] C. Maruejouls, Fusion Engineering and Design, 69, (2003), pp 585-591.

[16] Demande de brevet au nom de CIMENTS FRANÇAIS et publiée sous le numéro EP 0 900 771 le 10 mars 1999.

[17] V. Chaudron, Thèse de l'Institut National Polytechnique de Lorraine, Avril 1998

[18] Brevet US 3,939,006 au nom de Union Carbide Corporation et publié le 17 février 1976.

## Revendications

1. Matériau apte à piéger l'hydrogène comprenant au moins un oxyde métallique dans une matrice cimentaire géopolymérique, ledit oxyde métallique étant de l'oxyde de manganèse catalysé par l'argent, ledit oxyde de manganèse catalysé par l'argent étant défini comme un mélange d'un oxyde de manganèse avec de l'argent métallique, un composé à base d'argent ou un mélange de ceux-ci.

2. Matériau selon la revendication 1, **caractérisé en ce que** ledit oxyde métallique est un mélange d'oxyde de manganèse ($MnO_2$) et d'oxyde d'argent ($Ag_2O$).

3. Enceinte fermée apte à contenir des matières radioactives susceptibles de produire, par radiolyse ou par réaction chimique, de l'hydrogène, **caractérisée en ce que** ladite enceinte contient en outre au moins un matériau tel que défini à la revendication 1 ou 2.

4. Procédé de préparation d'un matériau tel que défini à la revendication 1 ou 2, comprenant une étape consistant à incorporer un piégeur d'hydrogène contenant au moins un oxyde métallique dans un mélange cimentaire géopolymérique, ledit oxyde métallique étant de l'oxyde de manganèse catalysé par l'argent, ledit oxyde de manganèse catalysé par l'argent étant défini comme un mélange d'un oxyde de manganèse avec de l'argent métallique, un composé à base d'argent ou un mélange de ceux-ci.

5. Procédé de préparation selon la revendication 4, **caractérisé en ce que** ledit procédé comprend les étapes consistant à :

   a) préparer un piégeur d'hydrogène contenant au moins un oxyde métallique tel que défini à la revendication 1 ou 2 ;
   b) incorporer le piégeur d'hydrogène préparé à l'étape (a) dans un mélange cimentaire géopolymérique.

6. Procédé de préparation selon la revendication 5, **caractérisé en ce que** ledit mélange cimentaire comprend au moins deux éléments choisis dans le groupe constitué par une solution saline dont le pH est supérieur à 9, une source solide contenant des aluminosilicates amorphes, et des composants silicatés.

7. Procédé de préparation selon la revendication 5 ou 6, **caractérisé en ce que** le mélange cimentaire dans lequel est incorporé le piégeur d'hydrogène obtenu à ladite étape (b) est soumis à des conditions permettant le durcissement de la matrice cimentaire comprenant une étape de cure et/ou de séchage.

8. Procédé de préparation selon la revendication 7, **caractérisé en ce que** ladite étape de cure est mise en oeuvre sous une température comprise entre 10 et 60°C, notamment entre 20 et 50°C et, en particulier, entre 30 et 40°C et durant entre 1 et 40 jours, notamment entre 5 et 30 jours et, en particulier, entre 10 et 20 jours.

9. Procédé selon la revendication 7 ou 8, **caractérisé en ce que** ladite étape de séchage est réalisée à une température comprise entre 30 et 110°C, notamment entre 40 et 90°C et, en particulier, entre 50 et 70°C et durant entre 6 h et 10 jours, notamment entre 12 h et 5 jours et, en particulier, entre 24 et 60 h.

10. Utilisation d'un matériau tel que défini à la revendication 1 ou 2, pour éliminer l'hydrogène.

11. Utilisation d'un matériau tel que défini à la revendication 1 ou 2, pour enrober au moins un déchet technologique ou au moins une matière radioactive.

12. Procédé d'élimination de l'hydrogène dans une enceinte fermée consistant à placer, dans ladite enceinte, un matériau tel que défini à la revendication 1 ou 2.


**Patentansprüche**

1. Material, das in der Lage ist, Wasserstoff einzufangen, enthaltend zumindest ein Metalloxid in einer geopolymeren zementartigen Matrix, wobei das Metalloxid silberkatalysiertes Manganoxid ist, wobei das silberkatalysierte Manganoxid definiert ist als ein Gemisch aus einem Manganoxid mit metallischem Silber, einer Verbindung auf Silberbasis oder einem Gemisch derselben.

2. Material nach Anspruch 1, **dadurch gekennzeichnet, dass** das Metalloxid ein Gemisch aus Manganoxid ($MnO_2$) und Silberoxid ($Ag_2O$) ist.

3. Abgeschlossene Umhüllung, die in der Lage ist, radioaktive Materialien zu enthalten, die durch Radiolyse oder chemische Reaktion Wasserstoff erzeugen können, **dadurch gekennzeichnet, dass** die Umhüllung ferner zumindest ein Material enthält, wie es in Anspruch 1 oder 2 definiert ist.

4. Verfahren zum Herstellen eines Materials, wie es in Anspruch 1 oder 2 definiert ist, umfassend einen Schritt des Einbringens eines Wasserstofffängers, der zumindest ein Metalloxid enthält, in ein geopolymeres zementartiges Gemisch, wobei das Metalloxid silberkatalysiertes Manganoxid ist, wobei das silberkatalysierte Manganoxid definiert ist als ein Gemisch aus einem Manganoxid mit metallischem Silber, einer Verbindung auf Silberbasis oder einem Gemisch derselben.

5. Herstellungsverfahren nach Anspruch 4, **dadurch gekennzeichnet, dass** das Verfahren die nachstehenden Schritte umfasst:

   a) Herstellen eines Wasserstofffängers, der zumindest ein Metalloxid enthält, wie es in Anspruch 1 oder 2 definiert ist;
   b) Einbringen des in Schritt (a) hergestellten Wasserstofffängers in ein geopolymeres zementartiges Gemisch.

6. Herstellungsverfahren nach Anspruch 5, **dadurch gekennzeichnet, dass** das zementartige Gemisch zumindest zwei Elemente, ausgewählt aus der Gruppe umfassend eine Kochsalzlösung mit einem pH-Wert von über 9, eine feste Quelle, die amorphe Aluminosilikate enthält, und Silikatkomponenten, enthält.

7. Herstellungsverfahren nach Anspruch 5 oder 6, **dadurch gekennzeichnet, dass** das zementartige Gemisch, in welches der in Schritt (b) erhaltende Wasserstofffänger eingebracht wird, Bedingungen ausgesetzt wird, die das Aushärten der zementartigen Matrix gestatten und einen Schritt des Härtens und/oder Trocknens umfassen.

8. Herstellungsverfahren nach Anspruch 7, **dadurch gekennzeichnet, dass** der Schritt des Härtens bei einer Temperatur zwischen 10 und 60 °C, insbesondere zwischen 20 und 50 °C, insbesondere zwischen 30 und 40 °C, und für zwischen 1 und 40 Tage, insbesondere zwischen 5 und 30 Tage, insbesondere zwischen 10 und 20 Tage, erfolgt.

9. Verfahren nach Anspruch 7 oder 8, **dadurch gekennzeichnet, dass** der Schritt des Trocknens bei einer Temperatur zwischen 30 und 110 °C, insbesondere zwischen 40 und 90 °C, insbesondere zwischen 50 und 70 °C, und für zwischen 6 Stunden und 10 Tage, insbesondere zwischen 12 Stunden und 5 Tage, insbesondere zwischen 24 und 60 Stunden, erfolgt.

**10.** Verwendung eines Materials, wie es in Anspruch 1 oder 2 definiert ist, zum Beseitigen von Wasserstoff.

**11.** Verwendung eines Materials, wie es in Anspruch 1 oder 2 definiert ist, zum Ummanteln von zumindest einem technologischen Abfall oder zumindest einem radioaktiven Material.

**12.** Verfahren zum Beseitigen von Wasserstoff aus einer geschlossenen Umhüllung, das darin besteht, in die Umhüllung ein Material, wie es in Anspruch 1 oder 2 definiert ist, einzusetzen.

**Claims**

**1.** A material capable of trapping hydrogen comprising at least one metal oxide in a geopolymeric cementitious matrix, said metal oxide being a manganese oxide catalyzed by silver, said manganese oxide catalyzed by silver being defined as a mixture of a manganese oxide with metal silver, a compound based on silver or a mixture thereof.

**2.** The material according to claim 1, **characterized in that** said metal oxide is a mixture of manganese oxide ($MnO_2$) and of silver oxide ($Ag_2O$).

**3.** A closed enclosure capable of containing radioactive materials which may produce, by radiolysis or chemical reaction, hydrogen, **characterized in that** said enclosure further contains at least one material as defined in claim 1 or 2.

**4.** A method for preparing a material as defined in claim 1 or 2, comprising a step consisting of incorporating a hydrogen getter containing at least one metal oxide into a geopolymeric cementitious mixture, said metal oxide being a manganese oxide catalyzed by silver, said manganese oxide catalyzed by silver being defined as a mixture of a manganese oxide with metal silver, a compound based on silver or a mixture thereof.

**5.** The preparation method according to claim 4, **characterized in that** said method comprises the steps of:

a) preparing a hydrogen getter containing at least one metal oxide and advantageously, a metal oxide as defined in claim 1 or 2;
b) incorporating the hydrogen getter prepared in step (a) into a geopolymeric cementitious mixture.

**6.** The preparation method according to claim 5, **characterized in that** said cementitious mixture comprises at least two elements selected from the group consisting of a saline solution for which the pH is greater than 9, a solid source containing amorphous aluminosilicates and silicate components.

**7.** The preparation method according to any of claims 5 or 6, **characterized in that** the cementitious mixture into which is incorporated the hydrogen getter obtained in said step (b) is subject to conditions allowing hardening of the cementitious matrix comprising a curing and/or drying step.

**8.** The preparation method according to claim 7, **characterized in that** said curing step is applied under a temperature comprised between 10 and 60°C, notably between 20 and 50°C and, in particular, between 30 and 40°C and lasting for a period between 1 and 40 days, notably between 5 and 30 days, and, in particular, between 10 and 20 days.

**9.** The preparation method according to claim 7 or 8, **characterized in that** said drying step is applied at a temperature comprised between 30 and 110°C, notably between 40 and 90°C and, in particular, between 50 and 70°C and lasting for a period between 6 hrs and 10 days, notably between 12 hrs and 5 days and, in particular, between 24 hrs and 60 hrs.

**10.** The use of a material as defined in claim 1 or 2 for removing hydrogen.

**11.** The use of a material as defined in claim 1 or 2 for coating at least one piece of technological waste or at least one radioactive material.

**12.** A method for removing hydrogen in a closed enclosure consisting of placing in said enclosure a material as defined in claim 1 or 2.

FIG. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2874120
- US 5837158 A
- US 6063307 A
- US 7001535 B
- WO 2006064289 A
- US 6200494 B
- US 5888925 A
- US 3939006 A
- US 4943394 A
- US 4252666 A
- EP 0900771 A
- US 20030213934 A

**Littérature non-brevet citée dans la description**

- **P.J. NIGREY.** *Sandia National Laboratories Report SAND2000-0483*
- **R. LIVINGSTON ; J. DUFFEY ; T. SHEPODD ; P. MCCONNELL.** *Sandia National Laboratories Report SAND2002-8267*
- **M. STONE ; M. BENSON.** *Idaho National Engineering and Environmental Laboratories Report, IN-EEL-EXT 2001-00085*
- **M. LATROCHE ; A. PERCHERON-GUEGAN.** *Ann. Sci. Mat.,* 2005, vol. 30 (5), 471-482
- **H. CHARCOSSET ; B. DELMON.** *Ind. Chim. Belg.,* 1973, vol. 38, 481-495
- **C. MARUEJOULS.** *Fusion Engineering and Design,* 2003, vol. 69, 585-591
- **V. CHAUDRON.** *Thèse de l'Institut National Polytechnique de Lorraine,* Avril 1998